(19) Europäisches Patentamt / European Patent Office / Office européen des brevets

(11) **EP 3 891 475 B1**

(12) **EUROPÄISCHE PATENTSCHRIFT**

(45) Veröffentlichungstag und Bekanntmachung des Hinweises auf die Patenterteilung:
**04.01.2023   Patentblatt 2023/01**

(21) Anmeldenummer: **19802147.9**

(22) Anmeldetag: **11.11.2019**

(51) Internationale Patentklassifikation (IPC):
***G01F 1/58*** (2006.01)

(52) Gemeinsame Patentklassifikation (CPC):
**G01F 1/584; G01F 1/588**

(86) Internationale Anmeldenummer:
**PCT/EP2019/080804**

(87) Internationale Veröffentlichungsnummer:
**WO 2020/114720 (11.06.2020 Gazette 2020/24)**

(54) **MAGNETISCH-INDUKTIVES DURCHFLUSSMESSGERÄT**

MAGNETIC INDUCTIVE FLOWMETER

DÉBITMÈTRE MAGNETIQUE INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2018   DE 102018131167**

(43) Veröffentlichungstag der Anmeldung:
**13.10.2021   Patentblatt 2021/41**

(73) Patentinhaber: **Endress + Hauser Flowtec AG**
**4153 Reinach (CH)**

(72) Erfinder: **MARIAGER, Simon**
**4059 Basel (CH)**

(74) Vertreter: **Penner, Paul**
**Endress + Hauser Group Services**
**(Deutschland) AG+Co. KG**
**PatServe**
**Colmarer Straße 6**
**79576 Weil am Rhein (DE)**

(56) Entgegenhaltungen:
**EP-A1- 0 183 859          EP-A1- 0 418 033**
**WO-A2-2004/031699     DE-A1-102011 079 352**
**JP-A- H08 247 812**

EP 3 891 475 B1

## Beschreibung

Magnetisch-induktive Durchflussmessgeräte werden zur Bestimmung der Durchflussgeschwindigkeit und/oder des Volumendurchflusses eines Mediums in einem Messrohr eingesetzt. Ein magnetisch-induktives Durchflussmessgerät umfasst eine magnetfelderzeugende Vorrichtung, die ein Magnetfeld senkrecht zur Querachse des Messrohres erzeugt. Dafür werden üblicherweise einzelne oder mehrere Spulen verwendet. Um ein überwiegend homogenes Magnetfeld zu realisieren, werden zusätzlich Sattelspulen oder Polschuhe so geformt und angebracht, dass die Magnetfeldlinien über den gesamten Rohrquerschnitt im Wesentlichen senkrecht zur Querachse verlaufen. Ein an die Mantelfläche des Messrohres angebrachtes Messelektrodenpaar greift eine induktiv erzeugte elektrische Messspannung ab, die entsteht, wenn ein leitfähiges Medium bei angelegtem Magnetfeld in Richtung der Längsachse fließt. Da die abgegriffene Messspannung laut Faraday'schem Induktionsgesetz von der Geschwindigkeit des fließenden Mediums abhängt, kann aus der Messspannung die Durchflussgeschwindigkeit und, mit Hinzunahme einer bekannten Rohrquerschnittsfläche, der Volumendurchfluss des Mediums ermittelt werden.

Magnetisch-induktive Durchflussmessgeräte sind empfindlich gegenüber dem Strömungsprofil des fließenden Mediums. Abhängig vom Rohrsystem und Messgerät können Messfehler von mehreren Prozent auftreten. Üblicherweise wird daher ein Geradrohr, dessen Länge mindestens das Fünf- bis Zehnfache der Nennweite des Messrohres entspricht, an die einlaufseitige Stirnfläche eingebaut. Es sind allerdings Anwendungen bekannt, in welchen dieser Mindestabstand, die sogenannte Einlaufstrecke, nicht eingehalten werden kann. Das ist zum Beispiel dann der Fall, wenn sich ein Rohrsystem auf engstem Raum befindet. Eine Lösung liefert die in DE102014113408A1 offenbarte Erfindung, bei der eine Verengung des Rohrdurchmessers zur Konditionierung des Flusses führt, wodurch der Einfluss des Strömungsprofils minimiert wird, so dass eine 0-DN Einlaufstrecke verwendet werden kann. Dieser Ausgestaltung nachteilig ist aber, dass zwar eine geringere Empfindlichkeit gegenüber rotationsunsymmetrischer Strömungsprofile realisiert werden kann, dafür aber ein Druckverlust in Kauf genommen werden muss. Außerdem beschränkt sich diese Ausgestaltung auf Rohrsysteme mit DN<600.

Der Einfluss der Geometrie auf den Durchfluss lässt sich am besten an folgendem Zusammenhang verdeutlichen:

$$U(x) = \int_V v(x') \, GF(x',x) \, dV$$

wobei für die Bestimmung der Spannung $U(x)$, die Strömungsgeschwindigkeit $v(x')$ und die Gewichtsfunktion $GF(x', x)$ über das Volumen des Messrohres integriert werden. Dabei wird die Gewichtsfunktion GF anhand $GF(x', x) = B \times \nabla G(X', X)$, mit dem Magnetfeld $B(x')$ und einer Green'schen Funktion G, die durch die elektrischen Randbedingungen gegeben ist, beschrieben. Das Ziel eines Optimierungsverfahrens ist es nun die Geometrie des Aufbaus dahingehend zu optimieren, dass im gesamten Strömungsprofil $\nabla \times GF = 0$ gilt. Dies ist jedoch für ein Rohr mit einem einzelnen punktförmigen Elektrodenpaar nicht möglich. Einen möglichen Lösungsansatz liefert die Anpassung der Elektrodenform.

Aus der DE102008059067A1 ist bereits ein magnetisch-induktives Durchflussmessgerät mit streifenartigen einen galvanischen Kontakt zum Medium formenden Messelektroden bekannt. Dabei sind die Messelektroden insbesondere aus dem gleichen Material oder einem gleichartigen Material wie die Innenbeschichtung des Messrohres, wobei das Material der Messelektroden eine wesentlich höhere elektrische Leitfähigkeit hat als das Material der Innenbeschichtung. Dieser Ausgestaltung nachteilig ist aber, dass es zwar funktionale, konstruktive und herstellungstechnische Vorteile aufweist, jedoch keine Lösung auf das Problem strömungsprofilbedingter Messfehler liefert.

So ist beispielsweise aus der DE102018108197.9 ein magnetisch-induktives Durchflussmessgerät bekannt, das die Einflüsse eines rotationsunsymmetrischen Strömungsprofils bei der Bestimmung der Durchflussgeschwindigkeit und des Volumendurchflusses mit mindestens einem zusätzlich im Inneren des Messrohres angebrachten Messelektrodenpaar minimiert. Dieser Ausgestaltung nachteilig ist aber, dass zwar die Einflüsse des rotationsunsymmetrischen Strömungsprofils minimiert werden, dafür jedoch zusätzliche Messelektroden und weitere Öffnung in das Messrohr eingearbeitet werden müssen, und somit potentielle Leckagestellen entstehen.

Die WO 2004 031 699 A2 beschäftigt sich mit der Verringerung der Messwertverfälschung bei ungleichförmiger Strömungsverteilung. Dafür wird die Form und/oder die Anzahl der Spulen und deren jeweiliger Durchmesser derart angepasst, dass eine Kennlinie des Magnetfeldes im wesentlichen über den gesamten angegebenen Bereich fallend verläuft und zusätzlich die Bedingung eingehalten ist, dass die Kennlinie in diesem Bereich mindestens abschnittsweise kleinere Werte hat als eine Kennlinie $i = i_{max}(1 - \sin\varphi/\sin\varphi_0)$.

Die JP H08247812 A offenbart ein magnetisch-induktives Durchflussmessgerät mit einer Sattelspule, die einen Winkel $\phi_m$ von $0 \le 90°$ aufspannt und mit einem Mehrelektrodensystem, das einen Winkel $\phi_e$ mit $0,5 \cdot (90° - \phi_m/2) \le \phi_e \le 90° - \phi_m/2$ aufschlägt. Damit wird eine hohe Genauigkeit bei der Bestimmung der Durchflussrate bei Anwendungen mit hohen magnetischen Reynolds-Zahlen erreicht. Dies kommt beispielsweise bei Medien mit einer sehr hohen elektrischen Leitfähigkeit vor (z.B. flüssige Metalle).

Ausgehend von dem dargelegten Stand der Technik liegt der vorliegenden Erfindung die Aufgabe zugrunde, ein Verfahren zum Auslegen eines magnetisch-induktiven Durchflussmessgerätes und ein magnetisch-induktives Durchflussmessgerät bereitzustellen, mit welchem die Einflüsse eines rotationsunsymmetrischen Strömungsprofils bei der Bestimmung der Durchflussgeschwindigkeit und des Volumendurchflusses minimiert werden.

Die Aufgabe wird durch das erfindungsgemäße Verfahren nach Anspruch 1 und das magnetisch-induktive Durchflussmessgerät nach Anspruch 13 gelöst.

Ein erfindungsgemäßes Verfahren zum Auslegen eines magnetisch-induktiven Durchflussmessgerätes zur Messung der Durchflussgeschwindigkeit u oder des Volumendurchflusses $\dot{V}$ eines Mediums, wobei das magnetisch-induktive Durchflussmessgerät umfasst: ein Messrohr, zum Führen des Mediums in eine durch eine Messrohrachse definierte Längsrichtung, wobei das Messrohr eine einlaufseitige Stirnfläche und eine auslaufseitige Stirnfläche aufweist, welche das Messrohr in Längsrichtung abgrenzen, mindestens eine magnetfelderzeugende Vorrichtung zum Erzeugen eines im Wesentlichen senkrecht zur Längsrichtung stehenden Magnetfeldes im Medium, wobei eine vertikale Längsebene das Messrohr in eine erste Seite und in eine zweite Seite einteilt, wobei die magnetfelderzeugende Vorrichtung einen Polschuh aufweist, wobei der Polschuh in einem Querschnitt des Messrohres das Messrohr in einem maximalen Mittelpunktswinkel $\beta$ umgreift und mindestens zwei einen galvanischen Kontakt mit dem Medium bildende Messelektrodenbauteile, die dazu eingerichtet sind, eine senkrecht zum Magnetfeld und zur Längsrichtung induzierte Spannung zwischen den Messelektrodenbauteilen zu erfassen, wobei die Messelektrodenbauteile streifen- und kreisbogenförmig ausgebildet sind und jeweils eine Kreisbogenlänge l aufweisen, die in dem Querschnitt des Messrohres durch einen Mittelpunktswinkel $\alpha$ aufgeschlagen wird, wobei ein erstes Messelektrodenbauteil auf der ersten Seite und ein zweites Messelektrodenbauteil auf der zweiten Seite an einer Innenwand des Messrohres angeordnet sind, umfassend die Verfahrensschritte:

- Abstimmen der Mittelpunktswinkel $\alpha$ und $\beta$ so aufeinander, dass das Durchflussmessgerät in dem Maß unempfindlich gegenüber Abweichungen einer rotationssymmetrischen Strömung ist, dass das magnetisch-induktive Durchflussmessgerät bei einer Testmessung einen Messfehler der Durchflussgeschwindigkeit $\Delta_u = |(u_{va} - u_S)/u_{va}|$ und/oder einen Messfehler des Volumendurchflusses $\Delta_{\dot{V}} = |(\dot{V}_{va} - \dot{V}_S)/\dot{V}_{va}|$ kleiner 1,0%, insbesondere kleiner 0,5% und bevorzugt kleiner 0,2% aufweist, wobei das Abstimmen der Mittelpunktswinkel $\alpha$ und $\beta$ das Durchführen der Testmessung umfasst, umfassend die Verfahrensschritte:
- Bestimmen der Durchflussgeschwindigkeit $u_{va}$ und/oder des Volumendurchflusses $\dot{V}_{va}$ im Falle einer Strömung mit voll ausgebildeten Strömungsprofil; und
- Bestimmen der Durchflussgeschwindigkeit $u_S$ und/oder des Volumendurchflusses $\dot{V}_S$ im Falle einer rotationsunsymmetrischen Strömung,

wobei die rotationsunsymmetrische Strömung durch eine an die einlaufseitige Stirnfläche eingerichtete und mindestens eine Störquelle umfassende Störung erzeugt wird.

Ein magnetisch-induktives Durchflussmessgerät, das unempfindlich gegenüber einem rotationsunsymmetrischen Strömungsprofil ist, bietet sich idealerweise für die Überwachung von Rohrsystemen an, bei denen eine optimale Einlaufstrecke, deren Länge ein Vielfaches der Nennweite des Messrohres entspricht, nicht realisiert werden kann.

Durch Störungen treten, abhängig vom Abstand und Art der Störung, durch ein nichtideales Strömungsprofil des Mediums Messfehler auf, da ein magnetisch-induktives Durchflussmessgerät normalerweise dahingehend optimiert wird, dass ein voll ausgebildetes rotationssymmetrisches Strömungsprofil vorliegt. Als voll ausgebildetes rotationssymmetrisches Strömungsprofil ist dabei das Strömungsprofil zu verstehen, dass sich in Strömungsrichtung nicht mehr ändert. Ein derartiges Strömungsprofil bildet sich beispielsweise in einem Messrohr mit einer Einlaufstrecke, entsprechend der 30-fachen Messrohr-Nennweite, und einer Mediumsgeschwindigkeit von 2 m/s aus.

Der Mittelpunktswinkel $\beta$ dient dabei als Kenngröße für die magnetfelderzeugende Vorrichtung und gibt an inwieweit das Messrohr durch den Polschuh im Querschnitt umgriffen wird. Während ein kleiner Mittelpunktswinkel $\beta$ dafür sorgt, dass die Magnetfeldlinien ausschließlich im Zentrum des Messrohres gebündelt werden, wird durch die Verwendung eines großen Mittelpunktswinkels $\beta$ ein annähernd über den gesamten Querschnitt des Messrohres homogenes Magnetfeld realisiert. Der Mittelpunktpunktswinkel $\beta$ ist dabei durch zwei Geraden gekennzeichnet, die sich im Mittelpunkt des Rohres treffen und die jeweils eines der beiden Enden des Polschuhs schneiden.

Es sind magnetfelderzeugende Vorrichtungen bekannt, die ein Leitblech im Außenbereich und mindestens ein Abschirmelement zwischen einem Polschuh und dem Leitblech und/oder oberhalb des Leitblechs und des Elektromagneten umfassen. Diese Bauteile erfüllen die Aufgabe Stör- oder Streufelder zu reduzieren und sind nicht für das Einkoppeln des Magnetfeldes in das Medium verantwortlich.

Die magnetfelderzeugende Vorrichtung ist außerhalb des Messrohres angeordnet und komplett anliegend, teilweise anliegend oder mit einem festen Abstand zum Messrohr befestigt.

Das Messrohr ist auf seiner das Medium berührenden Innenseite elektrisch isolierend ausgebildet, und zwar einerseits z.B. dadurch, dass das Messrohr selbst vollständig aus einem Isolierstoff, insb. aus gesinterter Keramik, bevorzugt aus Aluminiumoxid-Keramik, oder aus einem Kunststoff besteht. Andererseits kann die Isolierung auch dadurch realisiert sein, dass ein nichtferromagnetisches Metallrohr, insb. ein rostfreies Stahlrohr, innen mit einer Isolierschicht aus einem geeigneten Kunststoff, insb. aus Hartgummi, Weichgummi oder Polyfluorethylen, bevorzugt Polytetrafluorethylen, ausgekleidet ist.

Der Mittelpunktswinkel a dient als Kenngröße für die Messelektrodenbauteile, die dazu eingerichtet sind eine Messspannung im Medium abzugreifen. Ein streifen- und kreisbogenförmiges Messelektrodenbauteil weist eine Breite w und eine Kreisbogenlänge l auf, wobei die Kreisbogenlänge l durch den Mittelpunktswinkel a im Querschnitt des Messrohres aufgeschlagen wird. Der Mittelpunktpunktswinkel a ist dabei durch zwei Geraden gekennzeichnet, die sich im Mittelpunkt des Rohres treffen und die jeweils eines der beiden Enden des Messelektrodenbauteils schneiden.

Für die Ermittlung der Durchflussgeschwindigkeit und/oder des Volumendurchflusses einer Strömung mit voll ausgebildeten Strömungsprofil wird ein Durchflussmessgerät verwendet, das auf dem Coriolis-Prinzip basiert und eine Messgenauigkeit von 0,1 % aufweist. Dieses ist in einem Rohrsystem mit 0 m (oder 0 DN) Einlaufstrecke eingebaut und dient als Referenzsystem für das erfindungsgemäße magnetisch-induktive Durchflussmessgerät.

Gemäß einer Ausgestaltung gilt für den Mittelpunktswinkel a, dass $30° \leq \alpha \leq 60°$ ist und insbesondere, dass $40° \leq a \leq 50°$ ist.

Gemäß einer Ausgestaltung gilt für den Mittelpunktswinkel $\beta$, dass $50° \leq \beta \leq 90°$ ist und insbesondere, dass $70° \leq \beta \leq 80°$ ist.

Das Abstimmen der Mittelpunktswinkel a und $\beta$ wird mit einem Simulationsprogramm oder anhand eines Testaufbaus durchgeführt. Eine Testumgebung wird definiert oder aufgebaut und die Mittelpunkswinkel des Durchflussmessgerätes werden solange angepasst bis der Messfehler für die eingestellten Testumgebungen minimal ist.

Für die Testmessung wird eine rotationsunsymmetrische Strömung durch eine an die einlaufseitige Stirnfläche eingerichtete und mindestens eine Störquelle umfassende Störung erzeugt.

Die Testmessung kann auch zur Abstimmung der optimalen Mittelpunktswinkel a und $\beta$ dienen und wird dann im Voraus durchgeführt, so dass unter Berücksichtigung des optimierten Mittelpunktswinkelpaares a und $\beta$ ein strömungsprofilunabhängiges magnetisch-induktives Durchflussmessgerät realisiert wird.

Die Testmessung kann viele verschiedene Störquellen beinhalten, die allesamt einen beliebigen Einbauwinkel annehmen können. Durch die Verwendung von ausreichend unterschiedlicher Störungen können die Mittelpunktswinkel $\alpha$ und $\beta$ dahingehend optimiert werden, dass der Messfehler einer speziellen Störung einen Wert kleiner 0,05% und der maximale Messfehler einer beliebigen Störung einen Wert kleiner 0,5% annimmt.

Es hat sich herausgestellt, dass durch die Verwendung von zwei ausreichend unterschiedlichen Störquellen, insbesondere einer Blende und eines 90°Rohrbogens, ein bereits ausreichend gutes Mittelpunktswinkelpaar ($\alpha$, $\beta$) für ein magnetisch-induktives Durchflussmessgerät ermittelt werden kann, so dass eine beliebig andersartige Störung zu einem maximalen Messfehler von 0,5% führt. Durch Einbeziehen weiterer Störquellen in die Testmessung ändern sich die optimierten Parameter nur marginal, wodurch sich der resultierende Messfehler nur geringfügig ändert.

Gemäß einer Ausgestaltung wird durch die Blende 10% des Querschnitts des Messrohres abgedeckt, wobei die Blende eine Kreissehne aufweist, welche die Blende zum Rohr hin begrenzt, wobei die Blende eine erste Blendenorientierung oder eine zweite Blendenorientierung annimmt, wobei bei der ersten Blendenorientierung die Kreissehne senkrecht zum Magnetfeld orientiert ist und bei der zweiten Blendenorientierung die Kreissehne parallel zum Magnetfeld orientiert ist, wobei der 90°Rohrbogen eine erste Rohrbogenorientierung oder eine zweite Rohrbogenorientierung annimmt, wobei sich die erste Rohrbogenorientierung durch eine senkrecht zum Magnetfeld und zur Längsrichtung des Messrohres verlaufende Rohrachse auszeichnet und die zweite Rohrbogenorientierung durch eine parallel zum Magnetfeld und senkrecht zur Längsrichtung des Messrohres verlaufende Rohrachse auszeichnet.

Bislang wird dem Nutzer von magnetisch-induktiven Durchflussmessgeräten eine vorgeschriebene Einlaufstrecke vorgegeben. Diese vorgeschriebene Einlaufstrecke ist notwendig, um den für das Gerät spezifizierten Messfehler einzuhalten. Die auftretenden Messfehler müssen einmalig pro Störungstyp, Abstand, Montagewinkel und evtl. Reynoldszahl ermittelt werden. Dies geschieht entweder durch aufwendige Messreihen oder durch Simulationen der Strömungsverhältnisse bei unterschiedlichen Störungen und Auswertung der berechneten Strömungsprofile. Als Ergebnis dieses Schrittes erhält man Daten, die angeben, wie groß der Messfehler ist, der entstehen würde, wenn ein magnetisch-induktives Durchflussmessgerät in die entsprechende Position eingebaut werden würde und wie groß der Messfehler ist, wenn der Mittelpunktswinkel $\alpha$ der Messelektrodenbauteile oder der Mittelpunktswinkel $\beta$ der magnetfelderzeugenden Vorrichtung angepasst wird.

Gemäß einer Ausgestaltung ist die Störung mit Abstand 0-DN zur einlaufseitigen Stirnfläche eingerichtet.

Gemäß einer Ausgestaltung ist eine Unempfindlichkeit gegenüber einem rotationsunsymmetrischen Strömungsprofil bei einer Reynoldszahl des Mediums im Messrohr größer gleich 100.000, insbesondere größer gleich 50.000 und bevorzugt größer gleich 10.000 gegeben.

Gemäß einer Ausgestaltung weist das Messelektrodenbauteil eine quadratische, rechteckige oder ovale medienberührende Oberfläche auf.

Gemäß einer Ausgestaltung ist die Oberfläche an ihren Enden abgerundet oder geht in einen kreisförmigen Querschnitt über.

Dadurch können Diskontinuitäten in der Gewichtsfunktion an den Elektrodenenden vermieden werden und es ergibt sich eine glattere Gewichtsfunktion, die sich besser optimieren lässt. Kanteneffekte können somit vermieden werden.

Gemäß einer Ausgestaltung umfasst das Messelektrodenbauteil mindestens einen Elektrodenschaft und ein Elektrodenblech, wobei der Elektrodenschaft dazu eingerichtet ist das Elektrodenblech elektrisch zu kontaktieren und formschlüssig mit der Innenwand des Messrohres zu verbinden.

Es ist besonders vorteilhaft, wenn das Messelektrodenbauteil ein Elektrodenblech umfasst, da dieses kostengünstig hergestellt werden kann und sich einfach in das Herstellungsverfahren des magnetisch-induktiven Durchflussmessgerätes integrieren lässt. Desweiteren kann ein Elektrodenblech kreisbogenförmig ausgebildet sein, so dass es sich der Innenwand des Messrohres anpassen kann.

Wenn der Elektrodenschaft und das Elektrodenblech zweiteilig ausgebildet sind, ist es vorteilhaft, wenn der Elektrodenschaft dazu eingerichtet und derart geformt ist, das Elektrodenblech elektrisch zu kontaktieren und formschlüssig mit der Innenwand des Messrohres zu verbinden. Idealerweise weist der Elektrodenschaft einen pilzkopfförmigen Elektrodenkopf auf, der dazu eingerichtet ist beim Fixieren des Elektrodenschafts das Elektrodenblech gegen die Innenwand des Messrohres zu drücken und somit eine formschlüssige Verbindung herzustellen.

Gemäß einer Ausgestaltung ist der Elektrodenschaft stiftförmig, spitz oder pilzkopfförmig ausgebildet.

Gemäß einer Ausgestaltung ist der mindestens eine Elektrodenschaft und das Elektrodenblech einstückig ausgebildet oder stoffschlüssig verbunden.

Es ist vorteilhaft, wenn der Elektrodenschaft und das Elektrodenblech einstückig ausgebildet sind. Dadurch wird die Montage deutlich vereinfacht. Es ist besonders vorteilhaft, wenn der Elektrodenschaft stoffschlüssig mit Hilfe eines Schweiß-, Klebe- oder Schraubverfahrens mit dem Elektrodenblech verbunden ist. Das vereinfacht die Herstellung des Elektrodenbauteils wesentlich.

Gemäß einer Ausgestaltung sind die Messelektrodenbauteile achsensymmetrisch zur vertikalen Längsebene angeordnet.

Die beiden Messelektrodenbauteile müssen dabei nicht notwendigerweise diametral angeordnet sein und sind zumindest teilweise mit dem Messmedium galvanisch oder kapazitiv gekoppelt.

Das erfindungsgemäße magnetisch-induktive Durchflussmessgerät zur Messung der Durchflussgeschwindigkeit u oder des Volumendurchflusses $\dot{V}$ eines Mediums ist mittels des erfindungsgemäßen Verfahrens zum Auslegen ausgelegt.

Die Erfindung wird anhand der nachfolgenden Figuren näher erläutert. Es zeigt:

    Fig. 1: eine schematische Darstellung des Querschnittes und Längsschnittes eines magnetisch-induktiven Durchflussmessgerätes nach dem Stand der Technik;

    Fig. 2: eine schematische Darstellung des Längsschnittes eines magnetisch-induktiven Durchflussmessgerätes nach dem Stand der Technik;

    Fig. 3: eine schematische Darstellung des Querschnittes eines erfindungsgemäßen magnetisch-induktiven Durchflussmessgerätes;

    Fig. 4: eine schematische Darstellung des Längsschnittes eines erfindungsgemäßen magnetisch-induktiven Durchflussmessgerätes;

    Fig. 5: eine schematische Darstellung einer ersten Ausgestaltung der Elektrodenbaugruppe;

    Fig. 6: eine schematische Darstellung einer zweiten Ausgestaltung der Elektrodenbaugruppe;

    Fig. 7: eine schematische Darstellung einer dritten Ausgestaltung der Elektrodenbaugruppe;

    Fig. 8: eine schematische Darstellung einer vierte Ausgestaltung der Elektrodenbaugruppe;

    Fig. 9: eine schematische Darstellung unterschiedlicher Störquellen; und

    Fig. 10: eine Übersicht des Messfehlers in Abhängigkeit der Mittelpunktswinkel $\alpha$ und $\beta$ für ein 50-DN Messrohr.

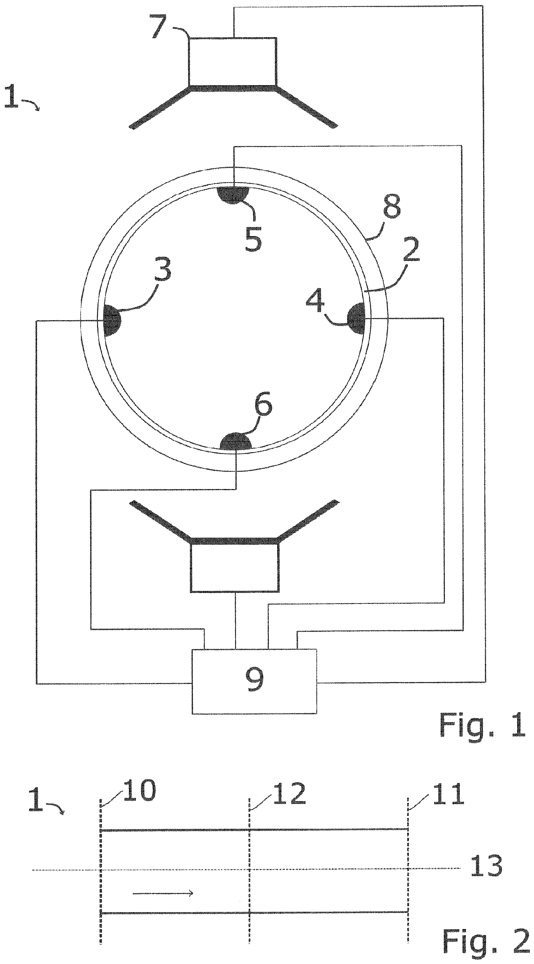

Die Fig. 1 zeigt ein aus dem Stand der Technik bekanntes magnetisch-induktiven Durchflussmessgerätes. Der Aufbau und das Messprinzip eines magnetisch-induktiven Durchflussmessgerätes sind grundsätzlich bekannt. Durch ein Messrohr (1) wird ein Medium geleitet, das eine elektrische Leitfähigkeit aufweist. Eine magnetfelderzeugende Vorrichtung (7) ist so angebracht, dass sich die Magnetfeldlinien senkrecht zu einer durch die Messrohrachse (13) definierten Längsrichtung orientieren. Als magnetfelderzeugende Vorrichtung (7) eignet sich vorzugsweise eine Sattelspule oder ein Polschuh (26) mit aufgesetzter Spule und Spulenkern. Bei angelegtem Magnetfeld entsteht im Messrohr (1) eine durchflussabhängige Potentialverteilung, die mit zwei an der Innenwand des Messrohres (1) angebrachten Messelektroden (3, 4) abgegriffen wird. In der Regel sind diese diametral angeordnet und bilden eine Elektrodenachse, die senkrecht zu den Magnetfeldlinien und der Längsachse des Rohres verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Um das Ableiten der an den Messelektroden (3, 4) anliegenden Messspannung über das Rohr (8) zu verhindern, wird die Innenwand mit einem isolierenden Material, beispielsweise einem Kunststoff-Liner (2) ausgekleidet. Das durch eine magnetfelderzeugende Vorrichtung, beispielsweise einen Elektromagneten, aufgebaute Magnetfeld wird durch einen mittels einer Betriebseinheit getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten im Medium oder geringer Leitfähigkeit. Eine Messeinheit liest die an den Messelektroden (3, 4) anliegende Spannung aus und gibt die Durchflussgeschwindigkeit und/oder den mittels einer Auswerteeinheit errechneten Volumendurchfluss des Mediums aus. Handelsübliche magnetisch-induktive Durchflussmessgeräte weisen zusätzlich zu den Messelektroden (3, 4) zwei weitere Elektroden (5, 6) auf. Zum einen dient eine optimalerweise am höchsten Punkt im Rohr (8) angebrachte Füllstandsüberwachungselektrode (5) dazu, eine Teilbefüllung des Messrohres (1) zu detektieren, diese Information an den Nutzer weiterzuleiten und/oder den Füllstand bei der Ermittlung des Volumendurchflusses zu berücksichtigen. Desweiteren dient eine Bezugselektrode (6), die üblicherweise diametral zur Füllstandsüberwachungselektrode (5) angebracht ist, dazu eine ausreichende Erdung des Mediums zu gewährleisten.

Ein magnetisch-induktives Durchflussmessgerät umfasst eine einlaufseitige Stirnfläche (10) und eine auslaufseitige Stirnfläche (11). In Fig. 2 deutet ein Pfeil die Flussrichtung des Mediums an. Ein an die einlaufseitige Stirnfläche (10) montierter 90°Rohrbogen (90°R) oder eine Blende (B) wirken sich auf das Strömungsprofil des Mediums aus, so dass im Querschnitt (12) des Messrohres (1) ein rotationsunsymmetrisches Strömungsprofil ausbildet.

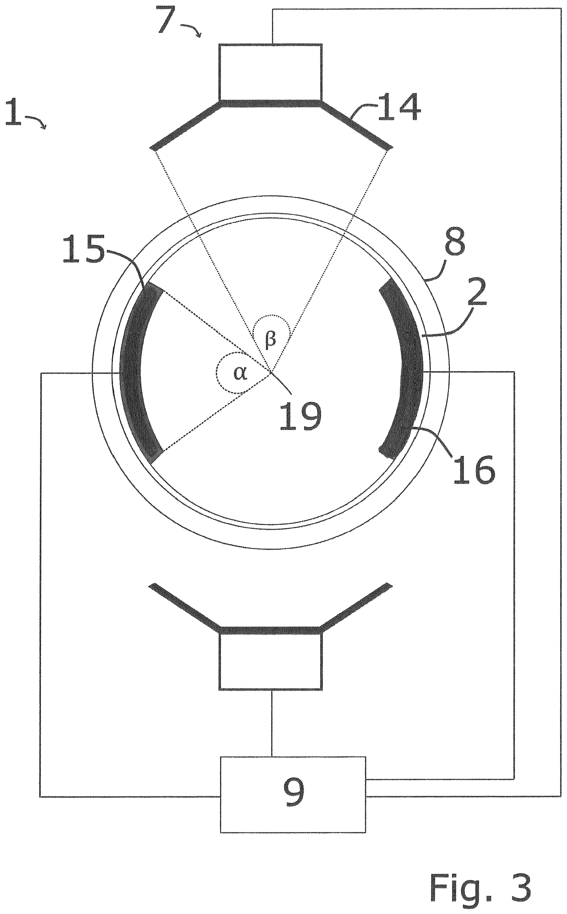

Die Fig. 3 zeigt ein erfindungsgemäßes magnetisch-induktives Durchflussmessgerätes. Der Aufbau und das Messprinzip eines magnetisch-induktiven Durchflussmessgerätes sind grundsätzlich bekannt. Durch ein Messrohr (1) wird ein Medium geleitet, das eine elektrische Leitfähigkeit aufweist. Eine magnetfelderzeugende Vorrichtung (7) ist so angebracht, dass sich die Magnetfeldlinien senkrecht zu einer durch die Messrohrachse (13) definierten Längsrichtung orientieren. Als magnetfelderzeugende Vorrichtung (7) eignet sich vorzugsweise eine Sattelspule oder ein Polschuh (14) mit aufgesetzter Spule und Spulenkern. Bei angelegtem Magnetfeld entsteht im Messrohr (1) eine durchflussabhängige Potentialverteilung, die mit zwei an der Innenwand des Messrohres (1) angebrachten Messelektroden, hier in Form von zwei Messelektrodenbauteilen (15, 16), abgegriffen wird. In der Regel sind diese diametral angeordnet und bilden eine Elektrodenachse, die senkrecht zu den Magnetfeldlinien und der Längsachse des Rohres verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Um das Ableiten der an den Messelektrodenbauteilen (15, 16) anliegenden Messspannung über das Rohr (8) zu verhindern, wird die Innenwand mit einem isolierenden Material, beispielsweise einem Kunststoff-Liner (2), ausgekleidet. Das durch eine magnetfelderzeugende Vorrichtung (7), in diesem Fall ein Polschuh (26) mit aufgesetzter Spule, aufgebaute Magnetfeld wird durch einen mittels einer Betriebseinheit getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten im Medium oder geringer Leitfähigkeit. Die magnetfelderzeugende Vorrichtung (7) ist durch den Mittelpunktswinkel $\beta$ charakterisiert. Der Mittelpunktswinkel $\beta$ beschreibt inwieweit das Messrohr durch die magnetfelderzeugende Vorrichtung umgriffen wird. In der in Fig. 3 dargestellten Ausgestaltung umfasst der Polschuh drei Segmente, wobei das erste und das dritte Segment, insbesondere die beiden äußeren Segmente, jeweils durch eine durch den Mittelpunkt des Rohres verlaufende Gerade geschnitten werden. Die beiden Geraden schlagen einen Kreissektor mit Mittelpunktswinkel $\beta$ auf. Eine Messeinheit liest die an den Messelektrodenbauteilen (15, 16) anliegende Spannung aus und gibt die Durchflussgeschwindigkeit und/oder den mittels einer Auswerteeinheit errechneten Volumendurchfluss des Mediums aus. Die beiden Messelektrodenbauteile sind jeweils (15, 16) durch den Mittelpunktswinkel a charakterisiert. Die Enden des Messelektrodenbauteils (15, 16) werden durch zwei sich im Mittelpunkt des Rohres treffende Geraden geschnitten, wobei die Geraden einen Kreissektor mit Mittelpunktswinkel a aufschlagen.

Die magnetfelderzeugende Vorrichtung (7) ist üblicherweise so konzipiert, dass sich die Magnetfeldlinien möglichst homogen über den Querschnitt (12) des Messrohres verteilen, insbesondere wird die magnetfelderzeugende Vorrichtung (7) so angepasst, dass ein linearer Zusammenhang zwischen der ermittelten Messspannung und dem Durchfluss des Mediums gilt. Dadurch können besonders für voll ausgebildete Strömungsprofile Messfehler von unter 0,2% erreicht werden. Bei einem rotationsunsymmetrischen Strömungsprofil kann sich ein homogenes Magnetfeld nachteilig auf die Messgenauigkeit auswirken. Dieses Problem kann erfinderisch durch das Anpassen der magnetfelderzeugenden Vorrichtung (7), insbesondere durch das Anpassen des Mittelpunktswinkels $\beta$ gelöst werden.

Durch die Variation des Mittelpunktswinkels $\beta$,

der beschreibt in wieweit ein an das Messrohr (1) angebrachtes Segment der magnetfelderzeugenden Vorrichtung (7) das Messrohr (1) umgreift, erhält man einen weiteren Freiheitsgrad für die Reduzierung des Messfehlers. Ein das Magnetfeld in das Medium einkoppelndes Segment kann einen Polschuh (14) umfassen, der zwei an eine ebene Fläche angrenzende Schenkel oder auch zwei an seiner ebenen Fläche angebrachte Kreisbögen aufweist. Alternativ kann ein Polschuh (14) auch die Form eines Kreisbogens annehmen. Im Allgemeinen kann ein das Magnetfeld in das Medium einkoppelndes Segment eine beliebige Kontur, bestehend aus mindestens einem weiteren Teilsegment, annehmen. Für die Ermittlung des maximalen Mittelpunktswinkels $\beta$ werden die Teilsegmente berücksichtigt, die im Wesentlichen dafür verantwortlich sind, das Magnetfeld in das Medium einzukoppeln.

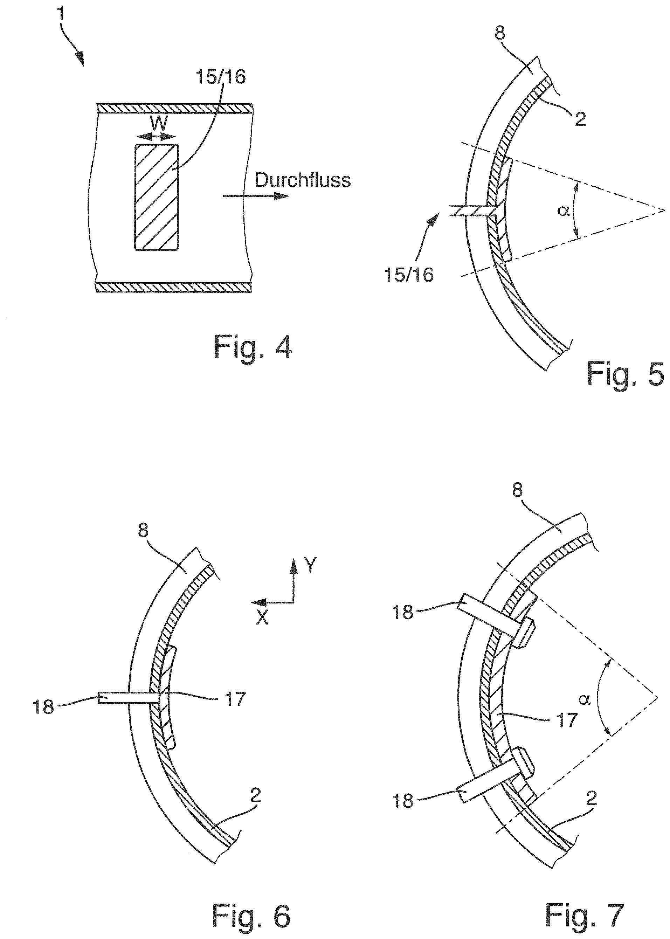

Die Fig. 4 zeigt einen Längsschnitt des Messrohres (1) mit einem erfindungsgemäßen Messelektrodenbauteil (15, 16). Das Messelektrodenbauteil (15, 16) ist dabei streifenförmig ausgebildet und weist eine Breite w auf. Weiterhin sind die Enden des Messelektrodenbauteils (15, 16) abgerundet.

In der Fig. 5 ist eine erste Ausgestaltung des Messelektrodenbauteils (15, 16) abgebildet. Dabei ist das Elektrodenblech (17) und der Elektrodenschaft (18) einstückig ausgebildet.

Demgegenüber zeigt die zweite Ausgestaltung in Fig. 6 ein zweistückiges Messelektrodenbauteil (15, 16), das aus einem Elektrodenblech (17) und einem mindestens den Liner (2) und das Rohr (8) durchdringenden, kreiszylindrischen Elektrodenschaft (18) besteht. Dabei ist der Elektrodenschaft (18) bolzenförmig ausgeführt mit dem Elektrodenblech (17) stoffschlüssig verbunden, insbesondere verschweißt, verklebt, verschraubt oder verlötet.

In der dritten Ausgestaltung nach Fig. 7 ist das Messelektrodenbauteil (15, 16) im Einzelnen so ausgebildet, dass das Elektrodenblech (17), der Liner (2) und das Rohr (8) jeweils eine Durchgangsbohrung beziehungsweise eine Öffnung aufweisen und der Elektrodenschaft (18) durch die Durchgangsbohrungen des Elektrodenbleches (17), des Liners (2) und des Rohres (8) geführt ist. Dabei ist, wie das die Fig. 7 zeigt, der Elektrodenschaft mit einem im Inneren des Messrohres (1) auf den Elektrodenblech (17) aufliegenden, linsenförmigen Elektrodenkopf versehen, beziehungsweise als Pilzelektrode ausgebildet. Desweiteren weist das Messelektrodenbauteil (15, 16) gemäß der dritten Ausgestaltung zwei Elektrodenschäfte (18) auf, wodurch das Elektrodenblech (17) an zwei Punkten an die Innenwand der Messrohres (1) gepresst wird und dadurch die Fixierung des Elektrodenbleches (17) realisiert wird.

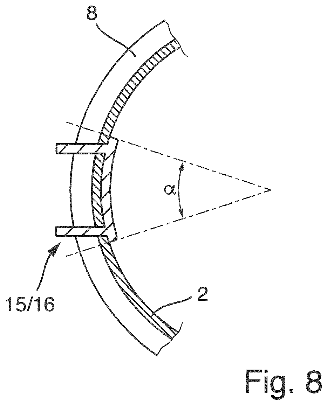

Ähnlich wie bei der dritten Ausgestaltung, wird das Elektrodenblech (17) der vierten Ausgestaltung mit Hilfe von mindestens zwei Elektrodenschäften (18) gegen die Innenwand des Messrohres (1) gepresst (siehe Fig. 8). Dabei sind die Elektrodenschäfte (18) einstückig mit dem Elektrodenblech (17) ausgebildet bzw. zumindest stoffschlüssig mit dem Elektrodenblech (17) verbunden.

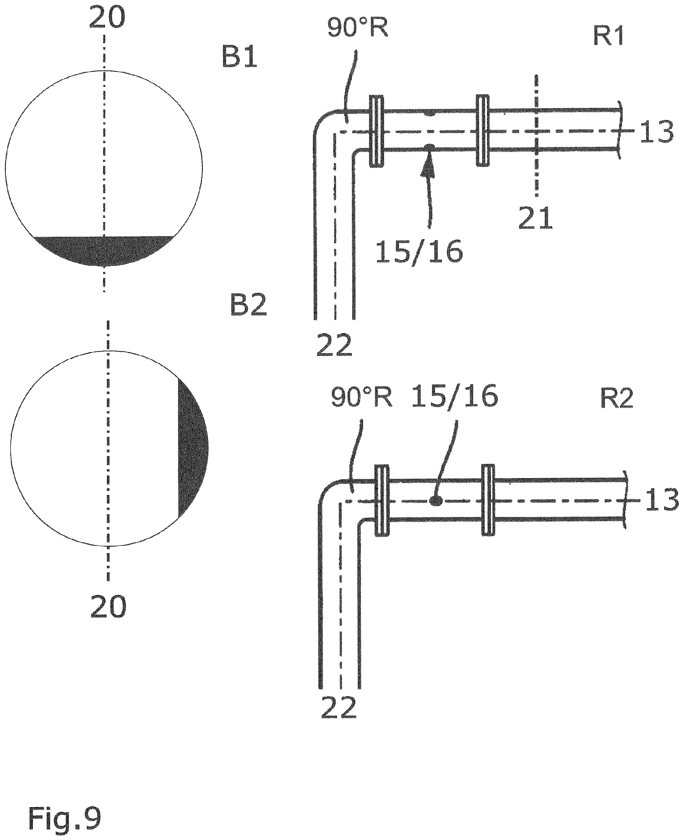

In den Simulationen bildet ein magnetisch-induktives Durchflussmessgerät mit zwei diametral angeordneten Messelektrodenbauteilen (15, 16) die Grundlage für die Berechnung der optimalen Mittelpunktswinkel $\alpha$ und $\beta$. Die Messelektrodenbauteile (15, 16) sind streifenförmig ausgebildet. Die Optimierung der Mittelpunktswinkel a und $\beta$ läuft in folgenden Schritten ab:
Im ersten Schritt werden die Mittelpunktswinkel $\alpha$ und $\beta$ so angepasst, dass der Messfehler der Durchflussgeschwindigkeit in Testmessungen mit einer einzelnen Störung minimal wird. Dabei wird die Störung durch eine Blende oder einen 90°Rohrbogen (90°R) (siehe Fig. 9) generiert.

Die Blende deckt dabei 10% des Rohrquerschnitts (12) ab und weist eine Kreissehne auf, welche die Blende zum Rohr hin begrenzt. Sie nimmt eine erste Blendenorientierung (B1) oder eine zweite Blendenorientierung (B2) an, die insbesondere um 90° zueinander verdreht sind. Dabei ist die Kreissehne bei der ersten Blendenorientierung (B1) senkrecht zum Magnetfeld und bei der zweiten Blendenorientierung (B2) parallel zum Magnetfeld orientiert. Die erste Blendenorientierung (B1) und die zweite Blendenorientierung (B2) einer Blende ist schematisch in Fig. 9 dargestellt. Das schwarz gefüllte Kreissegment stellt dabei die Fläche dar, die einen Teil der Querschnittsfläche des Messrohres blockiert. In der Testmessung ist die Blende (B) mit einem Abstand von 0-DN zur einlaufseitigen Stirnfläche (10) angebracht. Alternativ wird ein 90°Rohrbogen (90°R) eingangs zur einlaufseitigen Stirnfläche (10) in einem Abstand von 0-DN angebracht, wobei der 90°Rohrbogen (90°R) eine erste Rohrbogenorientierung (R1) oder eine zweite Rohrbogenorientierung (R2) annimmt, die insbesondere um 90° zueinander verdreht sind. Die erste Rohrbogenorientierung (R1) und die zweite Rohrbogenorientierung (R2) eines 90°Rohrbogens (90°R) ist schematisch in Fig. 9 dargestellt. Die Anpassung der Mittelpunktswinkel $\alpha$ und $\beta$ wird vorzugsweise für die beiden Störungen mit beiden Orientierungen durchgeführt.

Im zweiten Schritt wird das Mittelpunktswinkelpaar bestimmt, dessen maximaler Messfehler für alle durchgeführten Testmessungen minimal ist.

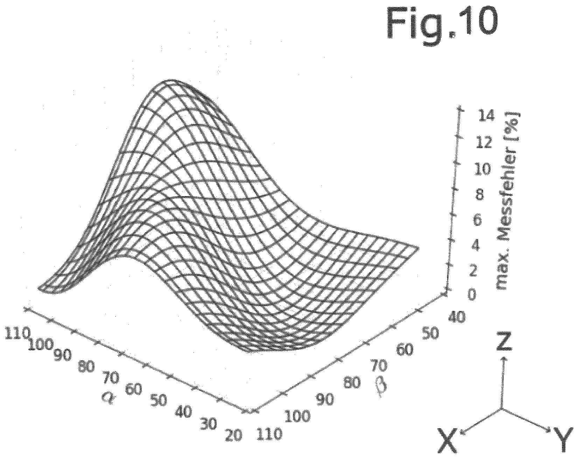

In Fig. 10 ist beispielhaft der simulierte Messfehler (Z-Achse) für ein 50-DN Messrohr (1) in Abhängigkeit vom Mittelpunktswinkel a (Y-Achse) und vom Mittelpunktswinkel $\beta$ (X-Achse) aufgetragen. Anhand des Verlaufes wird das Minimum des Messfehlers für eine spezifische Störung, hier ein Rohrbogen (90°R) optimiert bzgl. einer ersten und zweiten Rohrbogenorientierung (R1, R2), ermittelt. Dabei zeichnet sich die erste Rohrbogenorientierung (R1) durch eine senkrecht zum Magnetfeld und zur Längsrichtung verlaufende Messrohrachse (13) und die zweite Rohrbogenorientierung (R2) durch eine parallel zum Magnetfeld und senkrecht zur Längsrichtung verlaufende Messrohrachse (13) aus (siehe Fig.

9). Dieses Vorgehen wird für alle oben genannten Störungen wiederholt, wobei im letzten Schritt das Mittelpunktswinkelpaar ermittelt wird, das den kleinsten Messfehler bezüglich aller Testmessungen aufweist. Die Werte für die Mittelpunktswinkel a und $\beta$ werden solange angepasst, bis der resultierende Messfehler für alle Testmessungen kleiner 0,5%, bevorzugt kleiner 0,2% ist.

Basierend auf dem oben beschriebenen Optimierungsverfahren weist ein erfindungsgemäßes magnetisch-induktives Durchflussmessgerät mit einem 50-DN Messrohr (1) und einem Medium mit einer Durchflussgeschwindigkeit von 1 m/s einen Messfehler von 0,1% auf bei einer eingesetzten Blende mit Blendenorientierung (B1), und einen Messfehler von 0,1% bei einer eingesetzten Blende mit Blendenorientierung (B2).

**Bezugszeichenliste**

1    Messrohr
2    Liner
3    erste Messelektrode
4    zweite Messelektrode
5    Füllstandsüberwachungselektrode
6    Bezugselektrode
7    magnetfelderzeugende Vorrichtung
8    Rohr
9    Mess-, Betriebs- und/oder Auswerteeinheit
10   einlaufseitige Stirnfläche
11   auslaufseitige Stirnfläche
12   Querschnitt
13   Messrohrachse in Längsrichtung
14   Polschuh
15   erstes Messelektrodenbauteil
16   zweites Messelektrodenbauteil
17   Elektrodenblech
18   Elektrodenschaft
19   Mittelpunkt
20   vertikale Messrohr-Längsebene
21   Abzissenachse
22   Rohrachse
R1   Erste Rohrbogenorientierung
R2   Zweite Rohrbogenorientierung
B1   Erste Blendenorientierung
B2   Zweite Blendenorientierung

**Patentansprüche**

1.  Verfahren zum Auslegen eines magnetisch-induktiven Durchflussmessgerätes zur Messung der Durchflussgeschwindigkeit u oder des Volumendurchflusses $\dot{V}$ eines Mediums, wobei das magnetisch-induktive Durchflussmessgerät umfasst:

    - ein Messrohr (1), zum Führen des Mediums in eine durch eine Messrohrachse definierte Längsrichtung (13),
    wobei das Messrohr (1) eine einlaufseitige Stirnfläche (10) und eine auslaufseitige Stirnfläche (11) aufweist, welche das Messrohr (1) in Längsrichtung abgrenzen;
    - mindestens eine magnetfelderzeugende Vorrichtung (7) zum Erzeugen eines im Wesentlichen senkrecht zur Längsrichtung (13) stehenden Magnetfeldes im Medium,

        wobei eine vertikale Längsebene das Messrohr (1) in eine erste Seite und in eine zweite Seite einteilt,
        wobei die magnetfelderzeugende Vorrichtung (7) einen Polschuh (14) aufweist,
        wobei der Polschuh (14) in einem Querschnitt (12) des Messrohres (1) das Messrohr (1) in einem maximalen Mittelpunktswinkel $\beta$ umgreift; und

    - mindestens zwei einen galvanischen Kontakt mit dem Medium bildende Messelektrodenbauteile (15, 16), die dazu eingerichtet sind, eine senkrecht zum Magnetfeld und zur Längsrichtung induzierte Spannung zwischen den Messelektrodenbauteilen (15, 16) zu erfassen, wobei die Messelektrodenbauteile (15, 16) streifen- und kreisbogenförmig ausgebildet sind und jeweils eine Kreisbogenlänge *l* aufweisen, die in dem Querschnitt (12) des Messrohres (1) durch einen Mittelpunktswinkel $\alpha$ aufgeschlagen wird, wobei ein erstes Messelektrodenbauteil (15) auf der ersten Seite und ein zweites Messelektrodenbauteil (16) auf der zweiten Seite an einer Innenwand des Messrohres (1) angeordnet sind; umfassend die Verfahrensschritte:

        - Abstimmen der Mittelpunktswinkel $\alpha$ und $\beta$ so aufeinander, dass das Durchflussmessgerät in dem Maß unempfindlich gegenüber Abweichungen einer rotationssymmetrischen Strömung ist, dass das magnetisch-induktive Durchflussmessgerät bei einer Testmessung einen Messfehler der Durchflussgeschwindigkeit $\Delta_u = |(u_{va} - u_S)/u_{va}|$ und/oder einen Messfehler des Volumendurchflusses $\Delta_{\dot{V}} = |(\dot{V}_{va} - \dot{V}_S)/\dot{V}_{va}|$ kleiner 1,0% aufweist,

    wobei das Abstimmen der Mittelpunktswinkel a und $\beta$ das Durchführen der Testmessung umfasst, umfassend die Verfahrensschritte:

        - Bestimmen der Durchflussgeschwindigkeit $u_{va}$ und/oder des Volumendurchflusses $\dot{V}_{va}$ im Falle einer Strömung mit voll ausgebildeten Strömungsprofil; und
        - Bestimmen der Durchflussgeschwindigkeit $u_S$ und/oder des Volumendurchflusses $\dot{V}_S$ im Falle einer rotationsunsymmetrischen Strömung,

wobei die rotationsunsymmetrische Strömung durch eine an die einlaufseitige Stirnfläche eingerichtete und mindestens eine Störquelle umfassende Störung erzeugt wird.

2. Verfahren nach Anspruch 1, wobei für den Mittelpunktswinkel $a$ gilt, dass $30° \leq \alpha \leq 60°$ ist und insbesondere, dass $40° \leq \alpha \leq 50°$ ist.

3. Verfahren nach einem der vorhergehenden Ansprüche, wobei für den Mittelpunktswinkel $\beta$ gilt, dass $50° \leq \beta \leq 90°$ ist und insbesondere, dass $70° \leq \beta \leq 80°$ ist.

4. Verfahren nach einem der vorhergehenden Ansprüche,

wobei die Störquelle eine Blende und einen 90°Rohrbogen umfasst,
wobei durch die Blende 10% des Querschnitts des Messrohres abgedeckt wird,
wobei die Blende eine Kreissehne aufweist, welche die Blende zum Rohr hin begrenzt,
wobei die Blende eine erste Blendenorientierung (B1) oder eine zweite Blendenorientierung (B2) annimmt,
wobei bei der ersten Blendenorientierung (B1) die Kreissehne senkrecht zum Magnetfeld orientiert ist und bei der zweiten Blendenorientierung (B2) die Kreissehne parallel zum Magnetfeld orientiert ist,
wobei der 90°Rohrbogen eine erste Rohrbogenorientierung (R1) oder eine zweite Rohrbogenorientierung (R2) annimmt,
wobei sich die erste Rohrbogenorientierung (R1) durch eine senkrecht zum Magnetfeld und zur Längsrichtung des Messrohres (13) verlaufende Rohrachse (22) auszeichnet und die zweite Rohrbogenorientierung (R2) durch eine parallel zum Magnetfeld und senkrecht zur Längsrichtung des Messrohres (13) verlaufende Rohrachse (22) auszeichnet.

5. Verfahren nach einem der vorhergehenden Ansprüche, wobei die Störung mit Abstand 0-DN zur einlaufseitigen Stirnfläche (10) eingerichtet ist.

6. Verfahren nach einem der vorhergehenden Ansprüche, wobei eine Unempfindlichkeit gegenüber einem rotationsunsymmetrischen Strömungsprofil bei einer Reynoldszahl des Mediums im Messrohr größer gleich 100.000 ist.

7. Verfahren nach einem der vorhergehenden Ansprüche, wobei das Messelektrodenbauteil (15, 16) eine quadratische, rechteckige oder ovale medienberührende Oberfläche aufweist.

8. Verfahren nach Anspruch 7, wobei die Oberfläche an ihren Enden abgerundet ist oder in einen kreisformigen Querschnitt übergeht.

9. Verfahren nach einem der vorhergehenden Ansprüche,

wobei das Messelektrodenbauteil (15, 16) mindestens einen Elektrodenschaft (18) umfasst,
wobei das Messelektrodenbauteil (15, 16) ein Elektrodenblech (17) umfasst,
wobei der Elektrodenschaft (18) dazu eingerichtet ist das Elektrodenblech (17) elektrisch zu kontaktieren und formschlüssig mit der Innenwand des Messrohres (1) zu verbinden.

10. Verfahren nach einem der vorhergehenden Ansprüche, wobei der Elektrodenschaft (18) stiftförmig, spitz oder pilzkopfförmig ausgebildet ist.

11. Verfahren nach einem der vorhergehenden Ansprüche, wobei der mindestens eine Elektrodenschaft (18) und das Elektrodenblech (17) einstückig ausgebildet oder stoffschlüssig verbunden sind.

12. Verfahren nach einem der vorhergehenden Ansprüche, wobei zwei Messelektrodenbauteile (15, 16) achsensymmetrisch zur vertikalen Längsebene angeordnet sind.

13. Magnetisch-induktives Durchflussmessgerät zur Messung der Durchflussgeschwindigkeit u oder des Volumendurchflusses $\dot{V}$ eines Mediums, wobei das magnetisch-induktive Durchflussmessgerät mittels eines Verfahrens nach einem der vorhergehenden Ansprüche ausgelegt ist.

**Claims**

1. Procedure for the design and layout of an electromagnetic flowmeter designed to measure the flow velocity u or the volume flow V of a medium, wherein the electromagnetic flowmeter comprises:

   - a measuring pipe (1) designed to conduct the medium in a longitudinal direction (13) defined by a measuring pipe axis,
   wherein the measuring pipe (1) has a front face (10) on the inlet side and a front face (11) on the outlet side, which delimit the measuring pipe (1) in the longitudinal direction;
- at least a magnetic field generator (7), which is designed to generate a magnetic field in the medium that is essentially perpendicular to the longitudinal direction (13),

wherein a vertical longitudinal plane divides the measuring pipe (1) into a first side and a second side,
wherein the magnetic field generator (7) has a pole piece (14), wherein, in a cross-section (12) of the measuring pipe (1), the pole piece (14) surrounds the measuring pipe (1) in a maximum center angle $\beta$; and

- at least two measuring electrode components (15, 16) that form a galvanic contact with the medium, wherein said components are designed to measure a voltage induced perpendicularly to the magnetic field and to the longitudinal direction between the measuring electrode components (15, 16),
wherein the measuring electrode components (15, 16) are designed in the shape of a strip or arc and each have an arc length / which is imposed in the cross-section (12) of the measuring pipe (1) by a center angle a,
wherein a first measuring electrode component (15) is arranged on the first side and a second measuring electrode component (16) is arranged on the second side on an interior wall of the measuring pipe (1); wherein said method comprises the following steps:

- Adjustment of the center angles $\alpha$ and $\beta$ in relation to one another in such a way that the flowmeter is insensitive to deviations in a rotational symmetrical flow such that, during a test measurement, the electromagnetic flowmeter has a measured error of the flow velocity $\Delta_u = |(u_{va} - u_s)/u_{va}|$ and/or a measured error of the volume flow $\Delta_v = |(V_{va} - V_s)/V_{va}|$ that is less than 1.0 %,

wherein the adjustment of the center angles $\alpha$ and $\beta$ comprises the performance of the test measurement, which comprises the following procedural steps:

- Determination of the flow velocity $u_{va}$ and/or the volume flow Vva in the event of a flow with a fully developed flow profile; and
- Determination of the flow velocity $u_s$ and/or the volume flow $V_s$ in the event of a rotationally asymmetrical flow, wherein the rotationally asymmetrical flow is generated by a disturbance implemented on the front face on the inlet side and comprises at least one source of disturbance.

2. Procedure as claimed in Claim 1,
wherein the following applies for the center angle a:
$30° \leq \alpha \leq 60°$ and particularly $40° \leq \alpha \leq 50°$.

3. Procedure as claimed in one of the previous claims,
wherein the following applies for the center angle $\beta$:
$50° \leq \beta \leq 90°$ and particularly $70° \leq \beta \leq 80°$.

4. Procedure as claimed in one of the previous claims,

wherein the source of disturbance comprises an orifice plate and a 90° pipe elbow,
wherein 10 % of the cross-section of the measuring pipe is covered by the orifice plate,
wherein the orifice plate has a chord which delimits the orifice plate towards the pipe,
wherein the orifice plate adopts a first orifice plate orientation (B1) or a second orifice plate orientation (B2),
wherein, for the first orifice plate orientation (B1), the chord is oriented to be perpendicular to the magnetic field and, for the second orifice plate orientation (B2), the chord is oriented to be parallel to the magnetic field,
wherein the 90° pipe elbow adopts a first pipe elbow orientation (R1) or a second pipe elbow orientation (R2),
wherein the first pipe elbow orientation (R1) is **characterized by** a pipe axis (22) that extends perpendicularly to the magnetic field and to the longitudinal direction of the measuring pipe (13) and the second pipe elbow orientation (R2) is **characterized by** a pipe axis (22) that extends parallel to the magnetic field and perpendicularly to the longitudinal direction of the measuring pipe (13).

5. Procedure as claimed in one of the previous claims, wherein the disturbance is implemented at a distance of 0-DN from the front face (10) on the inlet side.

6. Procedure as claimed in one of the previous claims, wherein an insensitivity to a rotationally asymmetric flow profile is obtained for a Reynolds number of the medium in the measuring pipe greater than or equal to 100,000.

7. Procedure as claimed in one of the previous claims, wherein the measuring electrode component (15, 16) has a square, rectangular or oval surface that is in contact with the medium.

8. Procedure as claimed in Claim 7,

wherein the surface is rounded at its ends or transforms into a circular cross-section.

9. Procedure as claimed in one of the previous claims,

wherein the measuring electrode component (15, 16) comprises at least an electrode shaft (18), wherein the measuring electrode component (15, 16) comprises an electrode metal sheet (17),

wherein the electrode shaft (18) is designed to establish electrical contact with the electrode metal sheet (17) and to connect it in a positive-locking manner with the interior wall of the measuring pipe (1).

10. Procedure as claimed in one of the previous claims, wherein the electrode shaft (18) is pin-shaped, pointed or mushroom-shaped.

11. Procedure as claimed in one of the previous claims, wherein the at least one electrode shaft (18) and the electrode metal sheet (17) are formed as a single piece or are connected in a positive-locking manner.

12. Procedure as claimed in one of the previous claims, wherein two measuring electrode components (15, 16) are arranged to be axially symmetric in relation to the vertical longitudinal plane.

13. Electromagnetic flowmeter designed to measure the flow velocity *u* or the volume flow *V* of a medium, wherein the electromagnetic flowmeter is designed using a procedure as claimed in one of the previous claims.

**Revendications**

1. Procédé de conception d'un débitmètre électromagnétique destiné à la mesure de la vitesse d'écoulement *u* ou du débit volumique *V* d'un produit, le débitmètre électromagnétique comprenant :

- un tube de mesure (1) destiné à guider le produit dans une direction longitudinale (13) définie par un axe de tube de mesure,
le tube de mesure (1) présentant une surface frontale (10) côté entrée et une surface frontale (11) côté sortie, lesquelles surfaces délimitent le tube de mesure (1) dans la direction longitudinale ;
- au moins un dispositif générateur de champ magnétique (7), lequel est destiné à générer dans le produit un champ magnétique essentiellement perpendiculaire à la direction longitudinale (13),

un plan longitudinal vertical divisant le tube de mesure (1) en un premier côté et en un deuxième côté,
le dispositif générateur de champ magnétique (7) présentant une pièce polaire (14),
la pièce polaire (14) entourant le tube de mesure (1) dans une section transversale (12) du tube de mesure (1) selon un angle au centre maximal β ; et

- au moins deux composants d'électrode de mesure (15, 16) formant un contact galvanique avec le produit, lesquels composants sont adaptés pour mesurer une tension induite perpendiculairement au champ magnétique et à la direction longitudinale entre les composants d'électrode de mesure (15, 16),
les composants d'électrode de mesure (15, 16) étant réalisés en forme de bande et d'arc de cercle et présentant chacun une longueur d'arc de cercle *l* qui est imposée dans la section transversale (12) du tube de mesure (1) par un angle au centre a,
un premier composant d'électrode de mesure (15) étant disposé sur le premier côté et un deuxième composant d'électrode de mesure (16) sur le deuxième côté sur une paroi intérieure du tube de mesure (1) ; lequel procédé comprend les étapes suivantes:

- Ajustement des angles au centre α et β l'un par rapport à l'autre de telle sorte que le débitmètre soit insensible aux écarts d'un écoulement à symétrie de révolution et de telle sorte que le débitmètre électromagnétique présente, lors d'une mesure de test, un écart de mesure de la vitesse d'écoulement $\Delta_u = |(u_{va} - u_s)/u_{va}|$ et/ou un écart de mesure du débit volumique $\Delta v = |(V_{va} - V_s)/V_{va}|$ inférieur à 1,0 %,

l'ajustement des angles au centre α et β comprenant la réalisation de la mesure de test, comprenant les étapes de procédé suivantes :

- Détermination de la vitesse d'écoulement $u_{va}$ et/ou du débit volumique Vva dans le cas d'un écoulement avec un profil d'écoulement entièrement formé ; et
- Détermination de la vitesse d'écoulement $u_s$ et/ou du débit volumique $V_s$ dans le cas d'un écoulement asymétrique en rotation, l'écoulement asymétrique en rotation étant généré par une perturbation installée sur la surface frontale côté entrée et comprenant au moins une source de perturbation.

2. Procédé selon la revendication 1,

pour lequel la relation suivante s'applique à l'angle au centre α : 30° ≤ α ≤ 60° et notamment 40° ≤ α ≤ 50°.

3. Procédé selon l'une des revendications précédentes,
   pour lequel la relation suivante s'applique à l'angle au centre β : 50° ≤ β ≤ 90° et notamment 70° ≤ β ≤ 80°.

4. Procédé selon l'une des revendications précédentes,

   pour lequel la source de perturbation comprend un diaphragme et un coude de tube à 90°,
   10 % de la section du tube de mesure étant couverts par le diaphragme,
   le diaphragme présentant une corde qui délimite le diaphragme vers le tube, le diaphragme adoptant une première orientation de diaphragme (B1) ou une deuxième orientation de diaphragme (B2),
   la corde étant orientée perpendiculairement au champ magnétique pour la première orientation de diaphragme (B1) et la corde étant orientée parallèlement au champ magnétique pour la deuxième orientation de diaphragme (B2),
   le coude de tube à 90° prenant une première orientation de coude de tube (R1) ou une deuxième orientation de coude de tube (R2),
   la première orientation de coude de tube (R1) étant **caractérisée par** un axe de tube (22) s'étendant perpendiculairement au champ magnétique et à la direction longitudinale du tube de mesure (13) et la deuxième orientation de coude de tube (R2) étant **caractérisée par** un axe de tube (22) s'étendant parallèlement au champ magnétique et perpendiculairement à la direction longitudinale du tube de mesure (13).

5. Procédé selon l'une des revendications précédentes,
   pour lequel la perturbation est installée à une distance 0-DN de la surface frontale (10) côté entrée.

6. Procédé selon l'une des revendications précédentes,
   pour lequel une insensibilité à un profil d'écoulement asymétrique en rotation est obtenue pour un nombre de Reynolds du produit dans le tube de mesure supérieur ou égal à 100 000.

7. Procédé selon l'une des revendications précédentes,
   pour lequel le composant d'électrode de mesure (15, 16) présente une surface carrée, rectangulaire ou ovale en contact avec le produit.

8. Procédé selon la revendication 7,

pour lequel la surface est arrondie à ses extrémités ou se transforme en une section transversale circulaire.

9. Procédé selon l'une des revendications précédentes,

   pour lequel le composant d'électrode de mesure (15, 16) comprend au moins une tige d'électrode (18), le composant d'électrode de mesure (15, 16) comprenant une tôle d'électrode (17), la tige d'électrode (18) étant conçue pour établir un contact électrique avec la tôle d'électrode (17) et la relier par complémentarité de forme à la paroi intérieure du tube de mesure (1).

10. Procédé selon l'une des revendications précédentes,
    pour lequel la tige d'électrode (18) est conçue en forme de tige, de pointe ou de champignon.

11. Procédé selon l'une des revendications précédentes,
    pour lequel l'au moins une tige d'électrode (18) et la tôle d'électrode (17) sont formées d'une seule pièce ou sont reliées par une liaison de matière.

12. Procédé selon l'une des revendications précédentes,
    pour lequel deux composants d'électrode de mesure (15, 16) sont disposés de manière axisymétrique par rapport au plan longitudinal vertical.

13. Débitmètre électromagnétique destiné à la mesure de la vitesse d'écoulement $u$ ou du débit volumique $V$ d'un produit, le débitmètre électromagnétique étant conçu au moyen d'un procédé selon l'une des revendications précédentes.

Fig. 1

Fig. 2

EP 3 891 475 B1

Fig. 3

14

1

15/16

W

Durchfluss

## Fig. 4

8

2

α

15/16

## Fig. 5

8

Y

X

18

17

2

## Fig. 6

8

18

18

α

17

2

## Fig. 7

8

α

15/16

2

Fig. 8

20

B1    90°R                    R1

15/16                          13

21

B2

22

90°R  15/16              R2

13

22

Fig.9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014113408 A1
- DE 102008059067 A1
- DE 102018108197
- WO 2004031699 A2
- JP H08247812 A